Europäisches Patentamt

(19) European Patent Office

Office européen des brevets

(11) Publication number : **0 160 011 B1**

(12) **EUROPEAN PATENT SPECIFICATION**

(45) Date of publication of patent specification :
11.11.87

(21) Application number : 84903571.2

(22) Date of filing : 25.09.84

(86) International application number :
PCT/SE 84/00308

(87) International publication number :
WO/8501803 (25.04.85 Gazette 85/10)

(51) Int. Cl.⁴ : **G 02 B 26/02**

(54) **OPTICAL FIBER SWITCH.**

(30) Priority : 14.10.83 SE 8305653

(43) Date of publication of application :
06.11.85 Bulletin 85/45

(45) Publication of the grant of the patent :
11.11.87 Bulletin 87/46

(84) Designated contracting states :
DE FR GB

(56) References cited :
DE-A- 2 903 848
DE-A- 2 903 870
DE-A- 2 903 878
DE-A- 2 903 899
FR-A- 2 377 649
IBM Technical Disclosure Bulletin, vol. 25, December
1982, no. 7A, p. 3426-3429, Balliet and Gupta Fiber-
Optics switch with adjustable alignment

(73) Proprietor : TELEFONAKTIEBOLAGET L M ERICSSON
S-126 25 Stockholm (SE)

(72) Inventor : THURENIUS, Ake, Gunnar, Herbert
Sätragardsvägen 123
S-127 36 Skärholmen (SE)

(74) Representative : Johnsson, Helge et al
Telefonaktiebolaget L M Ericsson
S-126 25 Stockholm (SE)

## Description

### Technical field

The present invention relates to an optical fibre switch in particular, an optical switch as set out in the precharacterizing part of claim 1.

### Background art

In the optical fibre switch described in the Swedish patent application 8 204 085.8 there is included a movable part to which the optical fibres are attached. The fibres run along parallel to a fixed holder in the switch. Fibre ends having the same properties and dimensions as those in the movable slide are also fixedly arranged at the switching point. The movable slide is actuated by the movable armature in an electromagnetic circuit for providing the switching action, and the movable slide is returned to its neutral position in an unactuated state with the aid of a return spring.

### Disclosure of invention

In the known switch, direct actuation of the movable slide is achieved by an actuation arm provided with a spring tongue moving the slide under the action of a magnetic force from one position to the other. In practice there are problems with this direct actuation, however, since the tongue of the actuating arm should be stiff at the beginning of the movement but weak at the end of it.

The object of the present invention is to solve the above-mentioned problem by providing an actuation means in an optical fibre relay which has an indirect effect upon the movable slide. The invention is characterized as disclosed in the characterizing portion of claim 1.

### Brief description of drawings

The invention will now be described in detail with reference to the accompanying drawings, on which

Figure 1 is a total view of an optical fibre switch in accordance with the above mentioned Swedish patent application.

Figure 2 is a schematic diagram of fibres and the movement of the slide

Figure 3 is a schematic diagram of the slide movement

Figure 4 is a total view of a switch with indirect actuation in accordance with the present invention

Figure 5 is a detail view of a switch with indirect actuation according to Figure 4, and

Figure 6 is a side view of the switch of Figure 4.

### Best modes for carrying out the invention

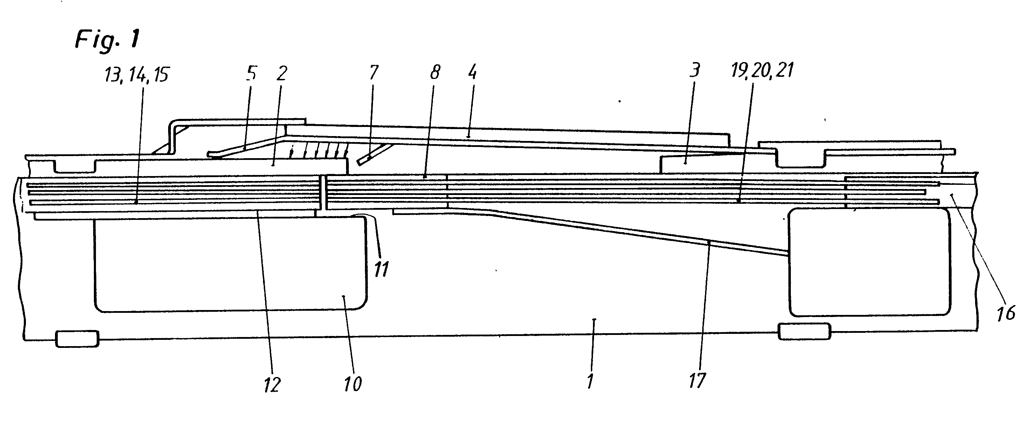

A general view is illustrated in Figure 1 of the optical fibre switch according to the above mentioned Swedish patent application, in the form of a relay. The relay is constructed on a bottom plate 1 along the long side of which two iron cores 2 and 3 are attached. An armature 4 of soft, magnetic material is attached to an armature spring 5. The flux is generated in a manner known per se, with the aid of an unillustrated coil which magnetizes an iron circuit in which the magnetic cores 2, 3 and the armature 4 are included.

A holder 12 is attached to the bottom plate. The holder fixes three optical fibres 13, 14 and 15. A movable part 8 can glide in a movement substantially perpendicularly to the longitudinal direction of the fibres 13, 14, 15. Three optical fibres 19, 20 and 22 are fixed to the part 8. These fibres extend to the right in the figure, past the right end edge of the slide, and are anchored in a fixed holder 16. A return spring 17 keeps the movable part 8 in place in its starting position where the part is pressed against the core 2. On magnetizing, the movable part is moved into engagement against a guide plate 10 at a surface denoted by the numeral 11 in figure 1.

In the described relay, as well as in similar structures for optical fibre switching, it is normal that the armature 4 directly actuates the movable slide. When the armature 4, on operation, moves towards the core 2, a spring tongue 7 will approach the movable part 8 and when the tongue meets the slide the former will first flex a given distance in response to the inertia of the slide 8 and the spring bias in the return spring 17, and will subsequently begin to push the movable part 8 until the latter is stopped by the surface 11. The armature 4 then continues its movement until it fully engages the core 2. The spring tongue 7 is thereby forced to deflect further.

In an optical fibre relay for switching, the movement of the fibre carrying part will be determined by the spacing between the fibres.

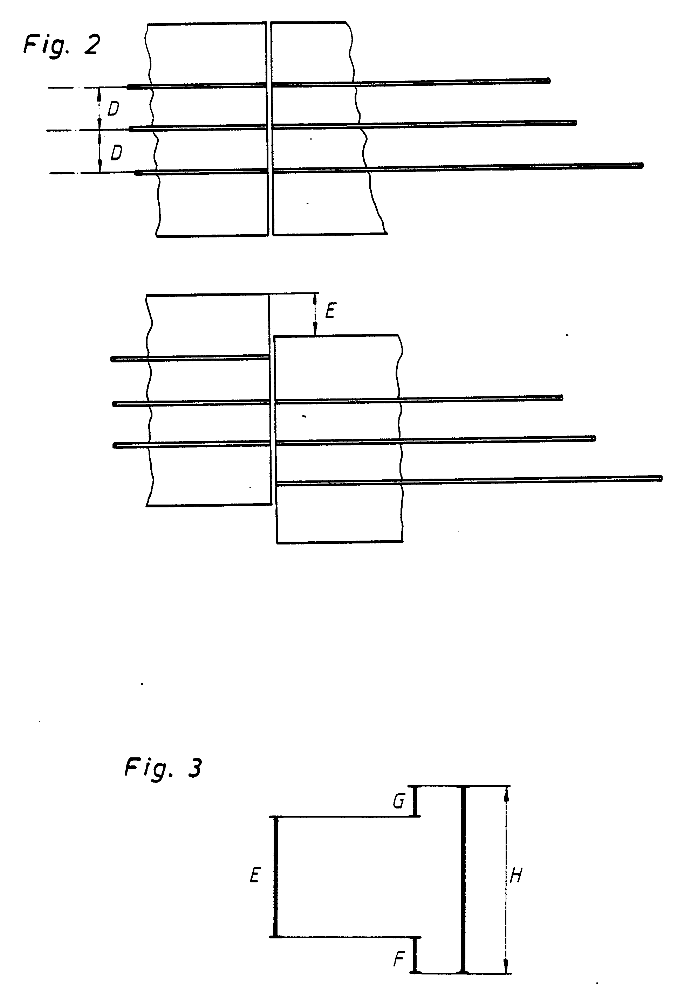

For a known relay according to the above, Figure 2 illustrates the spacing D and the distance E which the movable part moves when the relay is operated, and the distance E must in principle be equal to D in order that the optical axes of the fibres coincide before and after the movement. Figure 3 schematically illustrates the distance E and the distance the armature moves, namely H, which is equal to E + F + G, where the additional distance F may designate play or lost motion in the armature before the movable slide is actuated. The distance F may be said to be necessary to allow armature bounce when the relay is released without the slide giving the optical connection being affected. The distance G is the play or lost motion of the armature in the make state which ensures that minor dimensional inaccuracies do not affect the optical connection. The distances G and F contribute to the reliable function of the relay, and in practice they are small in relation to the necessary movement E.

Some form of spring means must be applied to provide the lost motions corresponding to distances G and F for a directly actuating armature. In Figure 1, this spring means is the spring tongue 7. In a practical embodiment there is an opposed relationship, however, since the tongue 7 should be stiff at the beginning of the movement so that the lost motion corresponding to F will not be large and thus require a large armature stroke. On the other hand, at the termination of stroke the liftning tongue should be weak, so as to withstand pressure without the force increasing too much. The present invention has been brought about to solve this problem.

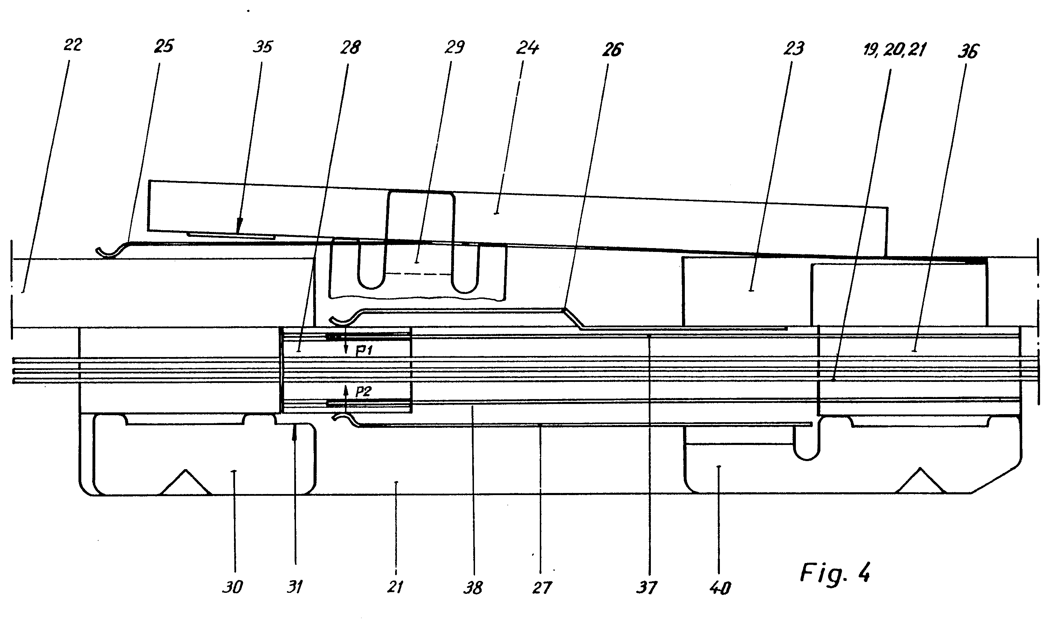

An optical fibre switch in accordance with the invention is illustrated in figures 4, 5 and 6. A make spring 26 attached to a core 23 is biassed so that it gives the movable part 28, corresponding to the part 8 in the known relay, a force $P_1$ in the order of magnitude 150 mN. A break spring 27 attached to a guide plate 40 is biassed so that it gives the movable slide 28 a force $P_2$ in the order of magnitude 300 mN. The resultant $P_2$-$P_1$ will be about 150 mN and constitutes the force which in a release state keeps the movable slide 28 against a core 22 corresponding to the core 2 in Figure 1.

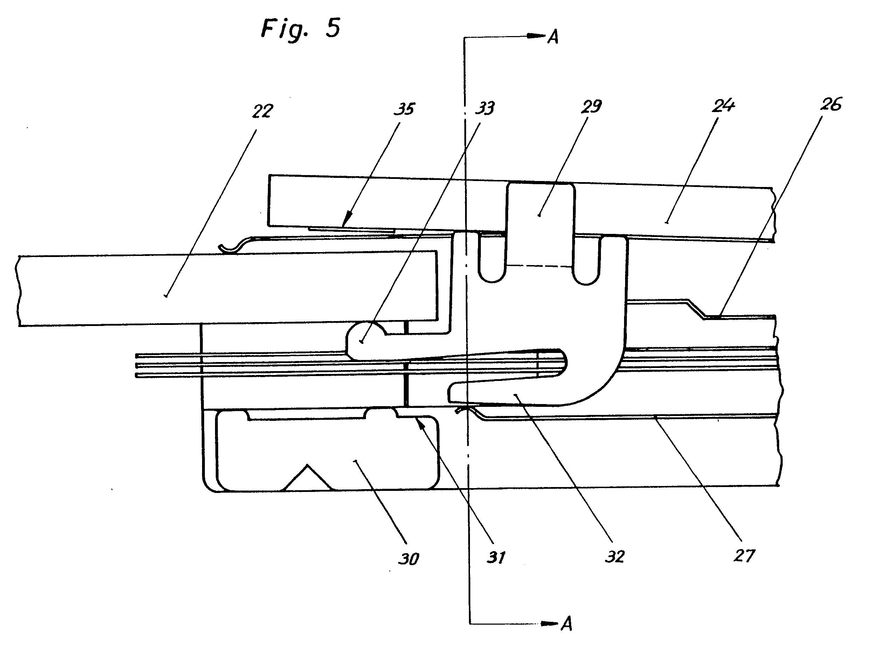

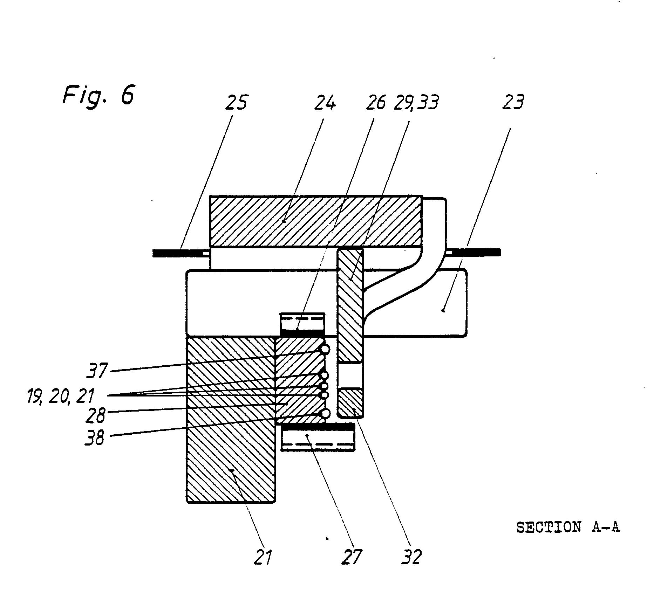

The complete appearance of an armature bracket 29 is illustrated in figures 5 and 6 ; it is only being partially shown in Figure 4. In Figure 5, the armature 24 is provided with the armature bracket 29 with an adustable tongue 32 which, upon the make action, contacts the break spring 27 and moves it downwards. This allows the make spring 26 to influence the movable part 28 so that it moves downwards and until it stops against the arresting surface 31 of the guide plate 30. The make spring 26 keeps the movable part 28 pressed against the stop surface 31. The armature 24 continues its movement further until it is stopped by a pole boss 35.

The forces acting on the armature in this indirectly driven coupling in the make state are as set out below.

During the first part (distance F see Figure 3), only the counter directed force (about 100 mN) of the armature spring 25.

During the next distance E, the break spring 27 (about 300 mN) acts on the armature counter to the direction of movement, and the make state, spring 26 (about 150 mN) acts on the armature with the direction of movement, (which means that the armature during this distance shall overcome a force of about 100 + 300 — 150 = 250 mN). Finally when the movable slide has been arrested against the stop surface 31, there remains the distance section G of the armature's movement. During this section of the movement G the armature is influenced by the armature spring 25 plus the break state spring 27, i. e. about 100 + 300 = 400 mN.

The construction of the switch of the invention is not limited to a leaf spring 26 providing a downward bias. It is also possible to pretension the fibres 19, 20, 21 at the holder 36 so that a biassing spring force occurs in the fibres themselves. The spring 27 will then act with a counter force on one or all of the fibres 19, 20, 21.

By the indirect action on the movable part the following advantages are afforded :

The slide 28 is acted on by the make state spring 26 immediately when the bracket tongue 32 actuates the break state spring 27 since the armature bracket tongue 32 is stiff. This means that the lost motion F can be made short.

The lost motion F can be adjusted by bending the tongue 32.

During the armature distance G the force which is to be overcome is only that of the return force in the armature spring 25 and the break spring 27.

The lost motion G is adjusted by bending the armature bracket tongue 33.

The armature stroke can be made less with this indirectly driven coupler than with a direct driven coupler, which requires a resilient armature tongue 7.

In the make state, the oscillating system (the part 28 with its fibres and the make spring 26) is disengaged from the armature 24 with its relatively large mass, whereby the damping time for the vibrations occurring at the operation state will be shortened.

In the manufacture of optical fibre switches according to the invention described here, the adjustment of the switch is facilitated in the following manner :

The armature with mounted armature spring 25 can be checked for giving the proper force, and, if necessary, be adjusted before attaching to the core 23. The make spring 26, which is mounted on the core 23, can be checked for the proper force and be adjusted, if necessary, before mounting of the part 28 and the other guides associated with the fibres. The break spring 27 which is mounted on its holder 40 can be checked for the right force and be adjusted, if necessary, before mounting the holder in the switch. The facility of separately adjusting the component springs 25, 26, 27 in the described manner results in that no operations are needed after the parts of the relay have been fitted in place and the risk of damaging the delicate fibre ends is thus considerably reduced. In respect of the armature 24, the method used for the springs has its counterpart in a measurement check and possible adjustment beforehand of the two adjusting tongues 32 and 33. In order that the movable part 28 shall be guided by the bottom plate 21 during its movement, the fixed fibre holder 36 has been provided with two wire springs 37, 38 which biases the part 28 towards the bottom plate 21 and which glide in grooves in the part 28 when the part 28 moves.

**Claims**

1. An optical fibre switch for switching, i. e. closing, interrupting or changing an optical signal path, comprising at least one fixed fibre end, which forms one signal path, and at least one movable fibre end which forms the other signal path, electromagnetically activated actuation means being arranged to provide, in response to an actuating magnetizing current, a displacement of the movable fibre end for optically coupling the first and the second signal path, or for interrupting the signal path and a break spring (27) providing a bias opposing said displacement characterized by cantilever spring means (26) for moving said at least one movable fibre end (19, 20, 21), the break spring (27) being capable of counteracting the cantilever spring means, and means (29, 32) for inhibiting, on magnetic actuation, the counteraction of the break spring (27) so that the fibre end is moved solely under the action of the cantilever springs means to provide said switching or interruption.

2. Switch as claimed in claim 1, characterized in that said actuating means comprise a magnetically activable armature (24) and that said inhibiting means comprise a bracket (29) provided with a tongue-like means (32) rigidly mounted on the armature, the tongue-like means (32) inhibiting said counteraction by pressing against the break spring (27) on magnetic actuation, and during the movement of the armature.

3. Switch as claimed in claim 2, characterized in that the tongue-shaped means is adjustable.

4. Switch as claimed in claim 2, characterized in that the armature (24) has a further adjustable tongue (33) for determining the stroke (H) of the armature.

5. Switch as claimed in claim 1, characterized in that one or both of the springs 26, 27 is a leaf spring.

## Patentansprüche

1. Schalter für einen Lichtleiter für Schaltvorgänge in einem optischen Signalweg, wie zum Beispiel Abschließen, Unterbrechen oder Wechseln, der zumindest ein festgelegtes Lichtleiterende, das einen Signalweg bildet und zumindest ein bewegliches Lichtleiterende, das den anderen Signalweg bildet, eine elektromagnetisch ausgelöste Betätigungsvorrichtung, die so angeordnet ist, daß sie als Reaktion auf einen betätigenden Magnetisierungsstrom die Verschiebung des beweglichen Lichtleiterendes bewirkt und so den ersten und den zweiten Signalweg optisch verbindet oder den Signalweg unterbricht, und eine Unterbrechungsfeder (27) umfaßt, die entgegen der Verschiebung eine Vorspannung bewirkt, umfaßt gekennzeichnet durch eine Auslegerfedervorrichtung (26), die das zumindest eine bewegliche Lichtleiterende (19, 20, 21) bewegt, das Vermögen der Unterbrechungsfeder (27) gegen die Auslegerfedervorrichtung (26) zu wirken, und eine Vorrichtung (29, 32), die, magnetisch erregt, die Gegenwirkung der Unterbrechungsfeder (27) derart verhindert, daß das Lichtleiterende allein unter der Wirkung der Auslegerfedervorrichtung (26) bewegt wird, um den genannten Schaltvorgang oder die Unterbrechung zu erzielen.

2. Schalter nach Anspruch 1, dadurch gekennzeichnet, daß die Erregervorrichtung einen magnetisch aktivierbaren Anker (24) umfaßt, und daß die Verhinderungsvorrichtung eine Stütze (29) umfaßt, die mit einer zungenartigen Vorrichtung (32) ausgerüstet ist, die starr an dem Anker befestigt ist, wobei die zungenartige Vorrichtung (32) die Gegenwirkung unterbindet, indem sie gegen die Unterbrechungsfeder (27) aufgrund magnetischer Erregung und während der Bewegung des Ankers drückt.

3. Schalter nach Anspruch 2, dadurch gekennzeichnet, daß die zungenförmige Vorrichtung einstellbar ist.

4. Schalter nach Anspruch 2, dadurch gekennzeichnet, daß der Anker (24) eine weitere einstellbare Zunge (33) aufweist für die Festlegung des Hubs (H) des Ankers.

5. Schalter nach Anspruch 1, dadurch gekennzeichnet, daß eine oder beide Federn (26, 27) eine Blattfeder ist.

## Revendications

1. Commutateur de fibres optiques destiné à la commutation, c'est-à-dire la fermeture, l'interruption ou le changement, d'un trajet de signaux optiques, comprenant au moins une extrémité de fibres fixes. qui forme un trajet de signal, et au moins une extrémité de fibres mobiles qui forment l'autre trajet de signal, des moyens d'actionnement activés électromagnétiquement, étant agencés pour produire, en réponse à un courant magnétisant d'actionnement, un déplacement de l'extrémité de fibres mobiles pour coupler optiquement les premier et second trajets de signaux, ou pour interrompre le trajet de signal et un ressort de rupture (27) produisant un rappel s'opposant audit déplacement, caractérisé par des moyens à ressort en porte-à-faux (26) destinés à déplacer ladite, au moins une, extrémité de fibres mobiles (19, 20, 21), le ressort (27) de rupture étant capable de s'opposer aux moyens à ressort en porte-à-faux, et des moyens (29, 32) destinés à inhiber, à la suite d'un actionnement magnétique, l'opposition du ressort de rupture (27) afin que l'extrémité de fibres soit déplacée uniquement sous l'action des moyens à ressort en porte-à-faux pour produire ladite commutation ou interruption.

2. Commutateur selon la revendication 1, caractérisé en ce que lesdits moyens d'actionnement comprennent une armature (24) pouvant être activée magnétiquement et en ce que lesdits moyens d'inhibition comprennent un support (29) équipé d'un moyen (32) analogue à une languette monté rigidement sur l'armature, le moyen (32) analogue à une languette inhibant ladite opposition en exerçant une pression contre le ressort de rupture (27) lors d'un actionnement magnétique et pendant le mouvement de l'armature.

3. Commutateur selon la revendication 2, caractérisé en ce que le moyen en forme de languette est réglable.

4. Commutateur selon la revendication 2, caractérisé en ce que l'armature (24) comporte une autre languette réglable (33) destinée à déterminer la course (H) de l'armature.

5. Commutateur selon la revendication 1, caractérisé en ce que l'un des ressorts (26 et 27), ou les deux, est un ressort à lame.

Fig. 1

13,14,15    5  2    7    8   4    3   19,20,21

1    12    10    11    1    17    16

0 160 011

Fig. 2

D

D

E

Fig. 3

G

E

H

F

22  25  35  28  29  24  26  23  19, 20, 21  36

3

0 160 011

↑ P1

↑ P2

30  31  21  38  27  37  40

Fig. 4

0 160 011

Fig. 5

## Fig. 6

25   24   26 29,33   23

37

19, 20, 21

28

38

21   27   32

SECTION A-A